# EUROPEAN PATENT APPLICATION

(11) **EP 4 657 375 A1**
(43) Date of publication of application: **03.12.2025**
(21) Application number: 24178446.1
(22) Date of filing: 28.05.2024
(51) Int. Cl.: G06T 7/30, A61C 9/00, G06T 19/20

(54) **METHOD AND SYSTEM FOR RECONSTRUCTING A PORTION OF A 3D REPRESENTATION**

(71) Applicant: 3Shape A/S, 1060 Copenhagen K (DK)
(72) Inventor: HANSEN, Jens Munk, 1060 Copenhagen K (DK); MISZTAL, Marek Krzysztof, 1060 Copenhagen K (DK); HOEDT, Asger Vejen, 1060 Copenhagen K (DK)
(74) Representative: Guardian IP Consulting I/S

(57) **Abstract**

This disclosure relates to a computer-implemented method of reconstructing a portion of a three-dimensional (3D) representation of at least a part of a jaw, the method comprising the steps of obtaining and storing a stream of 3D frames during a live scanning session of the jaw, wherein each 3D frame comprises data describing at least the geometry of at least a part of the jaw, processing the stream of 3D frames, storing the output of the processing, during the live scanning, reconstructing the 3D representation of at last a part of the jaw based on the processed 3D frames and based on an input signal received after the live scanning, reconstructing the portion of the 3D representation of at least a part of the jaw based on the stored stream of 3D frames and output of the processing stored during the live scanning.

## Description

### Technical field

Disclosed herein is a computer-implemented method for reconstructing a portion of a three-dimensional (3D) representation of at least a part of a jaw. The present disclosure further relates to a system for reconstructing a portion of a 3D representation of at least a part of a jaw.

### Background

Nowadays, three-dimensional (3D) scanner technology is widely used in dentistry as a method for obtaining information on a patient's oral cavity. Scan data of the oral cavity of the patient can be acquired during a scanning session performed by a user, such as a dentist or dental technician, who scans the oral cavity of the patient with an intraoral scanner. The scanning of the patient's oral cavity is typically carried out through a sequence of steps, in which scan data describing the lower jaw are first acquired, then scan data describing the upper jaw are acquired, or vice versa, and finally scan data describing the upper and lower jaws in occlusion are acquired. A digital 3D model of at least a part of the patient's jaw may be generated based on the acquired scan data. The digital 3D model of the jaw is oftentimes referred to as `reconstruction of the 3D representation' of the jaw. The reconstructed 3D representation of the patient's jaw can be used for several dental treatments, including, but not limited to, designing and fabricating dental restorations, orthodontic appliances, and other prosthetic devices.

The reconstruction of the 3D representation is continuously updated as more scan data are acquired and processed during the live scanning session, such that said 3D representation describes an increasingly larger part of the patient's jaw. If one or more error(s) occurs in the processing of the scan data, e.g. misalignments of the scan data, an inaccurate reconstruction of the 3D representation may be generated. As a solution to this problem, in current 3D scanning systems the user may manually edit the reconstructed 3D representation by trimming away the one or more inaccurate part(s). The disadvantage of this method is that it may require the user to trim away a large part of the generated 3D model, and/or it may require the user to accurately select the one or more part(s) of the 3D representation they want to trim away. Thus, some users may not feel confident to use the manual trimming tool.

The existing solution does not allow for a smooth scanning experience since, if one or more error(s) occurs in the processing of the scan data, the user performing the scanning may need to stop or pause the scanning multiple times during the scanning session to perform a manual action on the generated reconstruction of the 3D representation. Furthermore, if the gingiva of the patient collapses while the user is scanning a part of the patient's jaw, typically around a prepared tooth, current 3D scanning systems require the dentist to retract the patient's gingiva around the prepared tooth multiple times. Thus, existing solutions are not only time consuming for the user performing the scanning, but they may also be uncomfortable for the patient. All of this suggests the need for a more efficient and automated way for recovering a desired state of the reconstruction of the 3D representation of the patient's jaw that does not contain errors.

### Summary

In one aspect there is disclosed a computer-implemented method of reconstructing a portion of a 3D representation of at least a part of a jaw, the method comprising the steps of:
- Obtaining and storing a stream of 3D frames during a live scanning session of the jaw, wherein each 3D frame comprises data describing at least the geometry of at least a part of the jaw;
- Processing the stream of 3D frames;
- Storing the output of the processing;
- During the live scanning, reconstructing the 3D representation of at last a part of the jaw based on the processed 3D frames; and
- Based on an input signal received after the live scanning, reconstructing the portion of the 3D representation of at least a part of the jaw based on the stored stream of 3D frames and output of the processing stored during the live scanning.

Thus, each 3D frame obtained during the live scanning session and each output of the processing generated during the live scanning session are automatically stored. The output of the processing may comprise information about successful or unsuccessful processing of a 3D frame, e.g. when the processing of the 3D frame is performed, or when the processing of the 3D frame fails and/or is rejected. The output of the processing may further comprise the transformed 3D frames resulting from successful processing, i.e. 3D frames comprising data which have been successfully transformed according to the performed processing. It is therefore an advantage that the stream of 3D frames and the output of the processing are automatically stored during the live scanning session, as said stored information can be recovered and used by the user after the scanning session, in case one or more error(s) occurs at some point in the processing of the scan data, e.g. misalignments of one or more 3D frame(s). Accordingly, it is possible to reconstruct in an automated way and after the scanning session the desired state of the reconstruction of the 3D representation, without the user having to manually trim away a large part of the scan. Said desired state may be the exact state of the reconstruction of the 3D representation at a desired time of the scanning session, as the method disclosed herein may be deterministic.

In some embodiments, processing the stream of 3D frames further comprises filtering the stream of 3D frames before any further processing of the 3D frames is performed.

The 3D frames obtained during the live scanning session may comprise noisy, and/or unstable, and/or unnecessary data. Advantageously, filtering the stream of 3D frames ensures that only 3D frames comprising data that is necessary for reconstructing the 3D representation of at least a part of the jaw are further processed. This may reduce the computational time of the processing and minimize the occurrence of errors due to the processing of unstable data, such that a reconstruction of the 3D representation that is as accurate as possible, i.e. as close as possible to what the user saw in the patient's oral cavity during the live scanning session, may be generated.

In some embodiments, filtering the stream of 3D frames comprises classifying each data point comprised within the 3D frames based on a surface of an object in a patient's oral cavity to which said data point belongs, such as the surface of a tooth, the surface of a gingiva, and/or the surface of a soft tissue.

Data points describing the geometry of one or more part(s) of the patient's oral cavity which can move, e.g. soft tissues, are unstable, and may therefore introduce errors in the processing, for example due to variability and/or inconsistency. It is therefore an advantage that said data points are not further processed, as they may lead to an inaccurate reconstruction of the 3D representation. This may also reduce computational time, as only data points describing the geometry of one or more part(s) of the patient's oral cavity which is needed to reconstruct the 3D representation, e.g. teeth and gingiva, are further processed.

In some embodiments, filtering the stream of 3D frames further comprises disregarding 3D frames comprising a number of data points which are below a predefined threshold in the reconstruction of the 3D representation of at least a part of the jaw, and wherein said threshold comprises a minimum number of data points required for processing the 3D frames with a predefined resolution and/or accuracy.

This is an advantage, as the processing is skipped and/or not performed for 3D frames that do not comprise enough data to guarantee a predefined and/or desired accuracy and/or resolution of the output of the processing. Thus, 3D frames which may lead to an inaccurate reconstruction of the 3D representation are not further processed, saving computational time.

In some embodiments, processing the stream of 3D frames comprises registering each 3D frame.

The registration step enables the identification of 3D frames describing the same part of the jaw and/or adjacent parts of the jaw, i.e. 3D frames comprising 3D data which completely or partially overlap. Thus, the registration step ensures that the acquired scan data are correctly allocated to the same coordinate reference system to reconstruct the 3D representation of the patient's jaw in a consistent way.

In some embodiments, registering each 3D frame comprises determining the position and/or orientation of each 3D frame relative to at least one previously processed 3D frame.

This ensures that a 3D frame is registered only when a spatial transformation between the data comprised within said 3D frame and the data comprised within one previously processed 3D frame and/or within a collection of previously processed 3D frames can be identified. Such spatial transformation is typically a rigid transformation consisting of a translation and a rotation, however non-rigid transformations are also possible. If identified, said transformation may be applied to the data comprised within the newly registered 3D frame to allocate said 3D frame to the same coordinate reference system as the one previously processed 3D frame and/or as the collection of previously processed 3D frames. This is an advantage, since it ensures that the reconstruction of the 3D representation is generated using only 3D frames which are aligned with each other.

In some embodiments, processing the stream of 3D frames comprises removing undesirable data from the 3D frames.

Undesirable data may describe the geometry of undesired objects which are present in the patient's oral cavity but are neither rigid objects, i.e. teeth, nor gingiva. Said undesired objects may cover the surface of one or more part(s) of the patient's oral cavity which is essential for the reconstruction of the 3D representation, such as the surface of a tooth, the surface of a set of teeth, the surface of a gingiva, and so forth. It is therefore an advantage disregarding, i.e. deleting or not adding, the undesirable data in the reconstruction of the 3D representation, as said data would lead to an inaccurate and/or not clear 3D digital model of the patient's oral cavity.

In some cases, the data comprised within one or more 3D frame(s) may be partially related to the geometry of a rigid object and/or gingiva, and partially related to the geometry of an undesired object. For example, as the tongue of the patient tends to move during the scanning, the intraoral scanner may acquire one 3D frame that comprises both data describing the geometry of a part of a tooth and data describing the geometry of a part of the tongue of the patient. In this example, the data describing the part of the patient's tongue comprised within said 3D frame may be deleted from or not added in the reconstruction of the 3D representation.

In some embodiments, processing the stream of 3D frames further comprises disregarding 3D frames comprising undesirable data in the reconstruction of the 3D representation.

In some cases, the data comprised within one or more 3D frame(s) may be completely related to the geometry of an undesired object. Thus, it is an advantage to disregard, i.e. delete or not add, said 3D frame(s) in the reconstruction of the 3D representation, as it would lead to an inaccurate and/or not clear 3D digital model of the patient's oral cavity. For example, the intraoral scanner may acquire one 3D frame that comprises only data describing the geometry of a part of the patient's tongue. In this example, said 3D frame may be deleted from/not added in the reconstruction of the 3D representation.

In some embodiments, undesirable data comprises data corresponding to movable objects temporarily and/or permanently present in the oral cavity of the patient.

Movable objects permanently present in the jaw may be the soft tissue parts of the patient's mouth, such as the inside of a cheek, the tongue, lips, gums and/or loose gingival. Movable objects temporarily present in the patient's mouth may further or alternatively be a dentist's instrument or remedy, such as a dental suction device, cotton rolls, and/or cotton pads. Movable objects may further or alternatively be a finger of the dentist or a finger of the dental assistant. It is therefore an advantage to remove/not add data describing movable objects in the reconstruction of the 3D representation, as this guarantees a smoother scanning experience for the user, who does not need to constantly ward off soft tissue and/or instruments from the intraoral scanner during the scanning.

In some embodiments, processing the stream of 3D frames further comprises stitching registered 3D frames with previously registered 3D frames to generate a reconstruction of the 3D representation of at least a part of the jaw.

This ensures that the reconstruction of the 3D representation of at least a part of the jaw is generated by consecutively stitching together only 3D frames comprising data which completely or partially overlaps, i.e. data describing the geometry of parts of the patient's oral cavity which are spatially related with each other. For example, 3D frames comprising data which describe the geometry of adjacent parts of the same incisor will be stitched together in the processing, whereas 3D frames comprising data which describe the geometry of a part of an incisor and a part of a first molar will not be stitched together. This is an advantage, as it leads to an accurate 3D digital model of the patient's jaw.

In some embodiments, reconstructing the 3D representation of at least a part of the jaw further comprises performing an optimization step after the live scanning session.

The optimization step improves the overall accuracy of the reconstruction of the 3D representation, ensuring that said reconstruction is as close as possible to what the user actually saw in the patient's oral cavity during the live scanning session.

In some embodiments, the optimization step comprises translating and rotating the processed 3D frames to minimize the error accumulated in the registration of the 3D frames during the live scanning session.

It is natural that the error in the reconstruction of the 3D representation may increase as the scanning proceeds, as an increasing number of 3D frames is consecutively processed. For example, an error may occur in the registration of one 3D frame, such that said 3D frame may be misaligned relative to the already existing reconstruction of the 3D representation. Consequently, the position and/or orientation of the 3D frames consecutively obtained after the misaligned 3D frame will be determined relative to at least one misaligned 3D frame. This may result in the misalignment of a plurality of processed 3D frames, which may ruin a large part of the reconstruction of the 3D representation, e.g. split teeth may appear in the 3D representation. Thus, it is an advantage to perform a global transformation of the reconstruction of the 3D representation to minimize alignment errors which may occur during the processing of the 3D frames.

The optimization step may comprise a global transformation that may be a rigid transformation, i.e. consisting of a translation and a rotation, which allocates the data comprised within all the processed 3D frames to the same coordinate reference system. This ensures that, if the user re-starts the scanning, the generation of the reconstruction of the 3D representation is updated starting from a state of the reconstruction of the 3D representation which is as accurate as possible.

In some embodiments, reconstructing the portion of the 3D representation of at least a part of the jaw comprises re-generating, after the live scanning session, a desired state of the reconstruction of the 3D representation of at least a part of the jaw.

A specific state of the reconstruction of the 3D representation is the reconstruction of the 3D representation consecutively generated in a specific time window [Tᵢ, T_{f}] of the scanning session, wherein Tᵢ is a specific initial time and T_{f} is a specific final time. Said times Tᵢ and T_{f} may be selected or predefined times comprised between the time when the live scanning session was started and the time when the scanning was stopped or paused. For example, if the live scanning session was started at 0 seconds and it was stopped or paused 30 seconds after, a state of the reconstruction of the 3D representation may be the reconstruction of the 3D representation consecutively generated between Tᵢ=0 seconds and T_{f}=10 seconds, i.e. in the time window [0 seconds, 10 seconds].

Re-generating a desired state of the reconstruction of the 3D representation after the live scanning session is an advantage as, if one or more error(s) occurred in the processing of the 3D frames at some point during the live scanning, the user may recover the reconstruction of the 3D representation at a time of the scanning session when said reconstruction did not have errors, and re-starting the scanning from this point. Thus, the user can automatically fast-forward, after the live scanning session, the reconstruction of the 3D representation from the beginning of the live scanning session to the desired time of the scanning session by issuing an input signal, without having to manually edit the reconstruction of the 3D representation. Fast-forwarding the reconstruction to the desired time of the scanning is an advantage, since one or more steps of the processing may not be reversable. Accordingly, it may not be possible to undo said steps. As an example, the registration step may not be reversable, such that once a 3D frame has been registered to the reconstruction of the 3D representation, it may not be possible to undo said registration. Therefore, by fast-forwarding the reconstruction of the 3D representation to the desired time of the scanning session, the scanning experience is smoother both for the user and for the patient.

In some embodiments, the desired state of the reconstruction of the 3D representation of at least a part of the jaw is the reconstruction of the 3D representation of at least a part of the jaw at a desired previous time of the scanning session.

The dentist may detect that the reconstruction of the 3D representation is in a consistent state at a specific time of the scanning session, e.g. by checking the image of the reconstruction of the 3D representation generated up to said time on a display of a computer system. If one or more error(s) occurs while updating the reconstruction of the 3D representation in the consecutive segment of the scanning session, it is an advantage that the user can re-generate the state of the reconstruction of the 3D representation that they detected to be consistent at a previous time of the scanning session.

In some embodiments, the desired previous time comprises a time from among one or more time(s) when the scanning was stopped or paused during the live scanning session.

Typically, after the user stops or pauses the scanning, they check the image of the reconstruction of the 3D representation generated up to that time, e.g. on a display of a computer system. Thus, it is likely that the user detects, through the displayed image, whether the reconstruction of the 3D representation is in a consistent state when they stop or pause the scanning before proceeding with the scanning of the rest of the patient's jaw. Thus, it is an advantage that the user can re-generate the state of the reconstruction of the 3D representation at the time of the scanning session when they last stopped or paused the scanning, as that was likely one of the times during the live scanning session when they detected that the reconstruction of the 3D representation was in a consistent state.

In some embodiments, the desired previous time comprises a time from among one or more time(s) when a trimming action was performed on the reconstruction of the 3D representation during the live scanning session.

Typically, after the user trims one or more part(s) of the reconstruction of the 3D representation, they check the image of the reconstruction of the 3D representation generated up to that time, e.g. on a display of a computer system. Thus, it is likely that the user detects, through the displayed image, whether the reconstruction of the 3D representation is in a consistent state after trimming one or more part(s) of said 3D representation and before proceeding with the scanning of the rest of the patient's jaw. Thus, it is an advantage that the user can re-generate the state of the reconstruction of the 3D representation at the time of the scanning session when they last trimmed one or more part(s) of said 3D representation, as that was likely one of the times during the live scanning session when they detected that the reconstruction of the 3D representation was in a consistent state.

In some embodiments, the desired previous time comprises a time from among one or more time(s) when a locking action was performed on the reconstruction of the 3D representation during the live scanning session.

Typically, after the user locks one or more part(s) of the reconstruction of the 3D representation, they check the image of the reconstruction of the 3D representation generated up to that time, e.g. on a display of a computer system. Thus, it is likely that the user detects, through the displayed image, whether the reconstruction of the 3D representation is in a consistent state after locking one or more part(s) of said 3D representation and before proceeding with the scanning of the rest of the patient's jaw. Thus, it is an advantage that the user can re-generate the state of the reconstruction of the 3D representation at the time of the scanning session when they last locked one or more part(s) of said 3D representation, as that was likely one of the times during the live scanning session when they detected that the reconstruction of the 3D representation was in a consistent state.

In some embodiments, re-generating the desired state of the reconstruction of the 3D representation of at least a part of the jaw further comprises loading the stream of stored 3D frames, and loading the output of the processing stored during the live scanning session from the beginning of the live scanning session up to the desired previous time of the scanning session, and rerun one or more step(s) of the processing based on the output of the processing stored during the scanning session.

This ensures that the plurality of outputs of the processing stored from the beginning of the live scanning session up to the desired previous time of the scanning session are used to re-generate the reconstruction of the 3D representation up to said time, such that only a part of the processing is re-performed on the 3D frames. For example, the output of the processing may comprise information about whether a specific 3D frame was registered and stitched with previously processed 3D frames during the live scanning session. Accordingly, when said 3D frame and output of the processing are loaded after the live scanning session, the 3D frame is re-stitched with previously loaded 3D frames. In this example, only the stitching step is rerun, whereas the registration step is not re-performed, as the output of the registration performed and stored during the live scanning session is used. This is an advantage, as the re-generation process is substantially faster than it would be by re-performing all the steps of the processing.

In some embodiments, re-generating the desired state of the reconstruction of the 3D representation of at least a part of the jaw further comprises loading the stream of stored 3D frames and loading the output of the processing stored during the live scanning session from the beginning of the live scanning session up to the desired previous time of the scanning session without re-processing the stream of 3D frames.

This ensures that only the stream of stored 3D frames and output of the processing performed and stored from the beginning of the live scanning session up to the desired previous time of the scanning session are used to re-generate the reconstruction of the 3D representation. This is an advantage, as the re-generation process is substantially faster than it would be if the 3D frames had to be processed again.

In another aspect, there is disclosed herein a computer program product comprising instructions which, when the program is executed by a computer, cause the computer to perform the method as disclosed above.

Thus, in practice the method disclosed herein can be executed by any computer system configured to read the computer program product disclosed herein. This is an advantage, as the instructions comprised in said computer program enable to automize the execution of one or more step(s) of the method disclosed herein.

In another aspect, there is disclosed herein a non-volatile computer-readable medium comprising instructions which, when executed by a computer, cause the computer to perform the method according to any of the disclosed embodiments.

Thus, in practice the instructions to perform the method disclosed herein can be performed on any computer system configured to read the non-volatile computer-readable medium disclosed herein. This is an advantage, as said instructions can be retained also when the computer system is turned off, enabling the user to access the instructions and/or the data stored on the non-volatile computer-readable medium at any time and from any computer system configured to read the non-volatile computer-readable medium disclosed herein.

In another aspect, there is disclosed herein a system for reconstructing a portion of a 3D representation of at least a part of a jaw, the system comprising:
- an intraoral scanner;
- a communication interface;
- one or more processor(s);
- a display;
- one or more memories containing program content executable by said one or more processor(s), said program content comprising:
   i. executable instructions to obtain and store a stream of 3D frames during a live scanning session of a jaw;
   ii. executable instruction to process the stream of 3D frames;
   iii. executable instructions to store the output of the processing;
   iv. executable instructions to reconstruct, during the live scanning, the 3D representation of at least a part of the jaw based on the processed 3D frames;
   v. executable instructions to reconstruct, based on an input signal received after the live scanning, the portion of the 3D representation of at least a part of the jaw based on the stored stream of 3D frames and output of the processing stored during the live scanning.

Thus, each 3D frame obtained during the live scanning session and the output of each processing performed during the live scanning session are automatically stored on the one or more memories of the system disclosed herein. The output of the processing may comprise information about successful or unsuccessful processing of a 3D frame, e.g. when the processing of the 3D frame is performed, or when the processing of the 3D frame fails and/or is rejected. The output of the processing may further comprise the transformed 3D frames resulting from successful processing, i.e. 3D frames comprising data which have been successfully transformed according to the performed processing.

In current 3D scanner system, the user may pause the scanning after scanning a part of the patient's jaw they may need or want to recover at a later time and manually store the reconstruction of the 3D representation of said part. However, this requires the user to pause the scanning multiple times to store a copy of multiple parts of the patient's jaw that the user may want to recover after the live scanning session. It is therefore an advantage that the system disclosed herein comprises executable instructions to store the stream of 3D frames and the output of the processing during the live scanning session, as said stored information can be recovered by the user after the live scanning session, in case one or more error(s) occurs at some point in the processing of the scan data, e.g. misalignments of one or more 3D frame(s). Accordingly, the system disclosed herein enables to reconstruct, after the live scanning session and in an automated way, a portion of the 3D representation of at least a part of the jaw that does not contain any errors, without the user having to manually trim away a large part of the scan, and/or without having to manually store multiple data during the live scanning session. Thus, the system disclosed herein enables the user to scan the patient's jaw with more confidence, improving the overall scanning experience both for the user and for the patient.

### Brief description of the drawings

Fig. 1 illustrates a flowchart according to an embodiment of the computer-implemented method disclosed herein.
Fig.2 illustrates an embodiment of a 3D scanner system according to the present disclosure.
Fig. 3a and 3b illustrate flowcharts according to an embodiment of the computer-implemented method disclosed herein.
Fig. 4a and 4b are reference diagrams for describing a method by which a computer system operates according to the computer-implemented method disclosed herein, according to the present disclosure.
Fig. 5a and 5b are reference diagrams for describing a method by which a computer system operates according to the computer-implemented method disclosed herein, according to the present disclosure.
Fig. 6 illustrates a computer system in which the computer-implemented method disclosed herein, or parts thereof, may be implemented as computer-readable code.

### Detailed description of the drawings

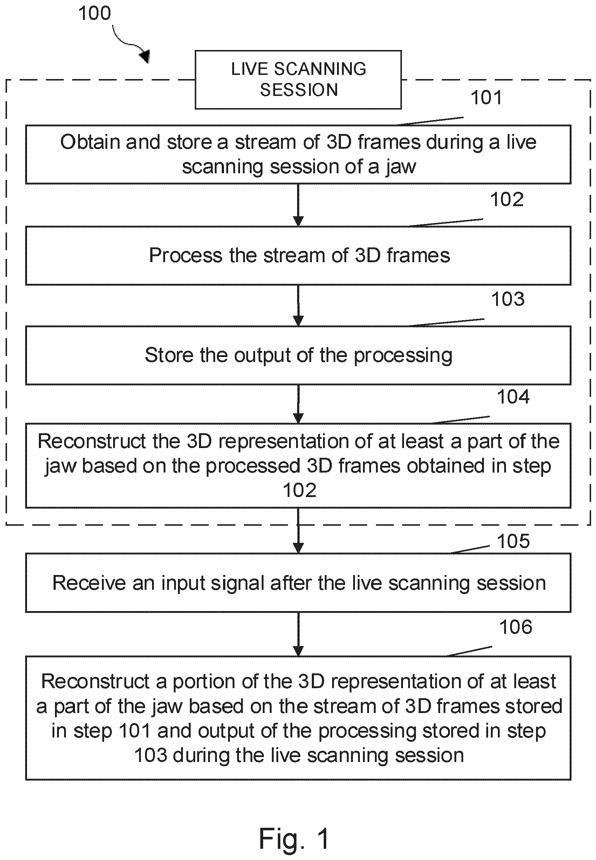

Fig. 1 illustrates a flowchart 100 according to an embodiment of the computer-implemented method disclosed herein. A live scanning session may be performed by a user who scans, with an intraoral scanner, a patient's jaw, while the patient is sitting in a chair, e.g. in a dental studio. The jaw of the patient includes any portion of the patient's oral cavity such as dentition, gingiva, hard palate, soft palate, etc. In step 101, a stream of three-dimensional (3D) frames is obtained and stored during the live scanning session of the jaw. Each 3D frame obtained during the live scanning session may comprise a plurality of data which collectively define a surface in space, e.g. a surface of an object in the patient's oral cavity. For example, each 3D frame may comprise a point cloud, a collection of point clouds, a polygon mesh, a voxel model, a triangulated point cloud, or any other method of storing information about the 3D geometry acquired during scanning. In some embodiments, each 3D frame may comprise a triangulated mesh, wherein the triangulated mesh comprises a set of triangles which are connected by their common edges or vertices. In general, the data comprised within each 3D frame describe at least the geometry of at least a part of the jaw.

In step 102, the 3D frames obtained during the live scanning session are processed. The processing of the 3D frames may comprise any function transforming partially or completely some or all of the data comprised within the 3D frames and/or any function generating new data based on the data comprised within the 3D frames, wherein said function may depend on the whole history of the 3D frames during the scanning session, i.e. on the output(s) of previously performed processing. The output of the processing performed in step 102 is stored in step 103. In some embodiments, the output of the processing may comprise information of successful/unsuccessful processing of the 3D frame in step 102, e.g. when the 3D frame can/cannot be processed, or the processing is executed/fails or the processing is accepted/rejected. For example, the processing of a 3D frame may be unsuccessful when the 3D frame does not comprise enough data points to allocate said 3D frame to the reconstruction of the 3D representation with a predefined accuracy, i.e. when the 3D frame contains a number of data points which is below a predefined threshold. The processing of a 3D frame may further be unsuccessful when the data comprised within the 3D frame describes a part of the jaw which is not related to the one or more part(s) of the jaw described by any previously processed 3D frame. The output of the processing may further comprise information on the time order of the 3D frames, i.e. the order in which each 3D frame was obtained and/or processed during the scanning session. This information may be stored as time stamps in each 3D frame. The output of the processing may further comprise the transformed 3D frames resulting from the successful processing performed in step 102, i.e. the processed 3D frames. The processed 3D frames comprise data which may be different from the original data comprised within the stream of 3D frames obtained and stored in step 101, i.e. the processed 3D frames may comprise additional or less data than the original 3D frames stored in step 101, and/or the processed 3D frames may comprise data that has been transformed according to the performed processing, e.g. a spatial transformation, etc.

In step 104, the 3D frames which were successfully processed in step 102 are used to generate, during the live scanning session, a reconstruction of the 3D representation of at least a part of the jaw. The reconstruction of the 3D representation is a digital 3D model of at least a part of the jaw, which may be generated by stitching together a plurality of processed 3D frames. Steps 101-104 of the flowchart 100 are performed during the live scanning session.

After the live scanning session is terminated or paused, an input signal may be received in step 105. The input signal may comprise a command function to reconstruct a portion of the 3D representation of at least a part of the jaw. By a portion it is meant the reconstruction of the 3D representation consecutively generated in a specific time window [Tᵢ, T_{f}] of the scanning session, wherein Tᵢ is a specific initial time and Tε is a specific final time. The initial time Tᵢ and the final time T_{f} may be two times between the time when the scanning session was started and the time when the scanning was stopped or paused. In some embodiments, said initial time Tᵢ may be the beginning of the live scanning session, such that the portion of the reconstruction of the 3D representation is the reconstruction of the 3D representation consecutively generated from the beginning of the live scanning session up to the desired previous time of the scanning. For example, if the scanning session was started at 0 seconds and it was stopped or paused 30 seconds after, the reconstruction of the 3D representation consecutively generated between Tᵢ=0 seconds and T_{f}=10 seconds, i.e. in the time window [0 seconds, 10 seconds], is a portion of the reconstruction of the 3D representation, and the reconstruction of the 3D representation consecutively generated in the time window [0 seconds, 20 seconds] is another portion of the reconstruction of the 3D representation, and so forth.

The user performing the scanning may want to recover the way the reconstruction of the 3D representation looked like at a previous time of the scanning session for several reasons. For example, the user may detect misalignments in one or more part(s) of the reconstruction of the 3D representation, and/or the gingiva of the patient may collapse while the user is scanning a part of the jaw, which may typically occur around a prepared tooth, and/or the gingiva may be erroneously elongated in the reconstruction of the 3D representation. In these cases, the user may want and/or need to recover the reconstruction of the 3D representation at a previous time during the scanning session, when the reconstruction was in a consistent state, e.g. when it did not have misalignments, and/or the gingiva did not collapse, and/or the gingiva was not elongated. Such a consistent state may be referred to herein as a 'desired state' of the reconstruction of the 3D representation.

In current solutions, the user may pause the scanning after scanning a part of the patient's jaw and they may manually store the reconstruction of the 3D representation of said part, i.e. multiple desired states of the reconstruction of the 3D representation may be manually stored by the user. However, this method is time consuming, as it requires the user to pause the scanning multiple times to store a copy of multiple parts of the patient's jaw that the user may need and/or want to recover after the live scanning session in case of unsatisfactory reconstruction. It is therefore an advantage that the stream of 3D frames and the output of the processing are automatically stored during the live scanning session, as said stored information can be recovered and used by the user at any time after the scanning session, in case one or more error(s) occurs at some point in the processing of the scan data, e.g. misalignments of one or more 3D frame(s). Referring to Fig. 1, based on the input signal received in step 105, in step 106 the portion of the 3D representation of at least a part of the jaw is reconstructed by using the stream of 3D frames stored in step 101 and the output of the processing stored in 103 during the live scanning. Here, reconstructing the portion of the 3D representation comprises re-generating the desired state of the reconstruction of the 3D representation, wherein the desired state of the reconstruction of the 3D representation is the reconstruction of the 3D representation at the desired previous time of the scanning session. Accordingly, it is possible to reconstruct, in an automated way and after the scanning session, the desired state of the reconstruction of the 3D representation, without the user having to store manually a plurality of data during the live scanning session.

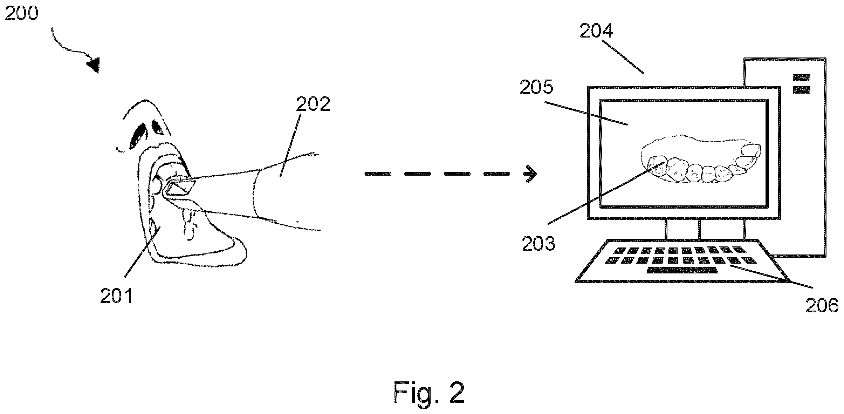

Fig. 2 illustrates an embodiment of a 3D scanner system 200 according to the present disclosure. The 3D scanner system may be configured for generating a 3D digital model of a dental object 201, i.e. a 3D representation of 201. Such dental object may be at least a part of the jaw including any portion of the patient's oral cavity such as dentition, gingiva, hard palate, soft palate, etc. In this embodiment, the 3D scanner system comprises an intraoral scanner 202 which may be configured to acquire, during a live scanning session of the dental object 201, a set of scan data. Said scan data may comprise 3D frames that describe at least the geometry of at least a part of the patient's jaw, e.g. the part which is captured by the field of view of the intraoral scanner 202.

For example, the intraoral scanner 202 may be based on a focus scanning principle, such that said intraoral scanner comprises an optical element, such as a focus lens, which is configured to move back and forth along an optical axis of the scanner during the scanning to change the focus of the scanner. In such example, the intraoral scanner 202 is configured to capture a plurality of 2D images at different focus plane positions, such that each series of captured 2D images corresponding to each focus plane forms a stack of 2D images. Said stack of 2D images is formed for a given view of the scanned object, i.e. for a given arrangement of the intraoral scanner 202 relative to the scanned object within the oral cavity of the patient. The depth information can be estimated based on a focus measure, such that the 2D image data can be converted into 3D frames.

In another example, the intraoral scanner 202 may be based on a depth-from-defocus scanning principle, wherein an optical property, such as an aperture, is changed between the acquisition of two 2D images, whereby depth can be estimated by determining the degree of defocus between the two 2D images, such that the 2D image data can be converted into 3D frames.

In another example, the intraoral scanner 202 may be further based on triangulation, wherein at least one camera and a projector unit are arranged such that they form a triangle with respect to a point on the scanned surface. For example, a projector and a camera may be used to determine the coordinate of points in 3D space based on triangulation. Alternatively, the intraoral scanner 202 may comprise two or more cameras viewing the scanned object from two different directions, wherein the cameras are configured to acquire a set of images of at least a part of said scanned object. In this case, a correspondence problem, i.e. ascertaining which parts of one image correspond to which parts of another image, is solved based on triangulation. In particular, the projector unit may be configured to project a plurality of projector rays onto a surface of a dental object, and solving the correspondence problem may comprise the steps of determining image features in the images within a set of images, and further associate said image feature with a specific projector ray. Subsequently, the depth of each projector ray may be computed, whereby a 3D frame describing at least the geometry of the scanned object may be obtained.

The intraoral scanning device 202 may be based on any other scanning principle not mentioned above, wherein the scanning principle enables the intraoral scanning device to acquire a stream of 3D frames comprising data describing at least the geometry of the scanned dental object(s) within the oral cavity of the patient.

The 3D scanner system further comprises one or more processor(s) for generating a 3D representation of the scanned object using the acquired 3D frames. The processor(s) may be integrated in the intraoral scanner 202, or they may be external to the intraoral scanner, e.g. such that the processing is performed on a computer system 204, or they may be a combination of the two, e.g. such that the processing is performed in part within the intraoral scanner and further processing is performed on the computer system. The intraoral scanner may be further configured to transmit real-time, either wired or wirelessly, the acquired 3D frames to the computer system 204. The computer system 204 may comprise a display 205 to display an image 203 of the 3D representation of 201 generated during the live scanning session, and/or an image 203 of the 3D representation of 201 generated in a scanning session of 201 performed at a previous time. The system 200 may further be configured to display a live view of the intraoral scanner 202. The 3D scanner system may be further configured to detect one or more input signal(s). As an example, the input signal may be detected through one or more sensors provided in the intraoral scanner 202. In this embodiment, the intraoral scanner may be further configured to transmit the input signal to the computer system 204. The input signal may be further or alternatively detected through one or more external device(s) connected to the computer system, such as a keyboard 206 and/or mouse (not shown) or any other input device.

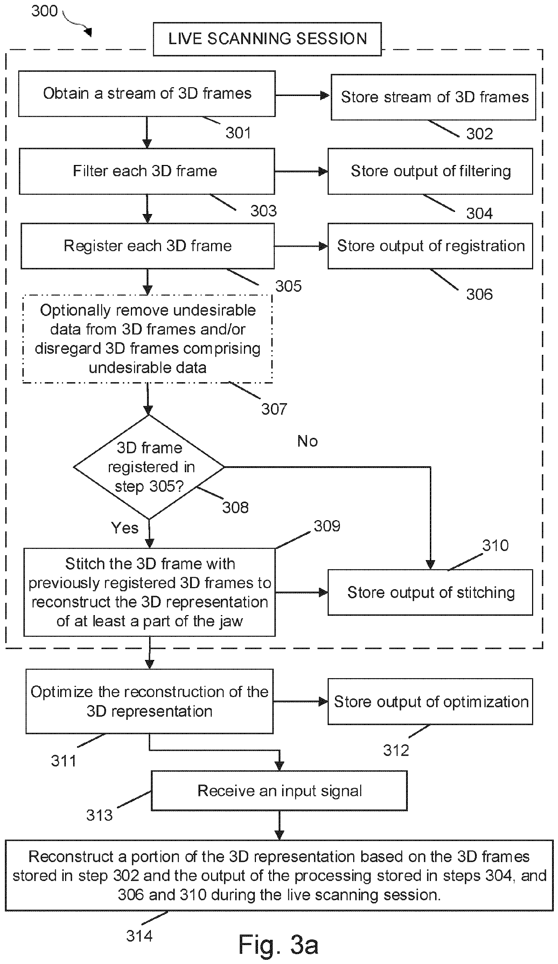

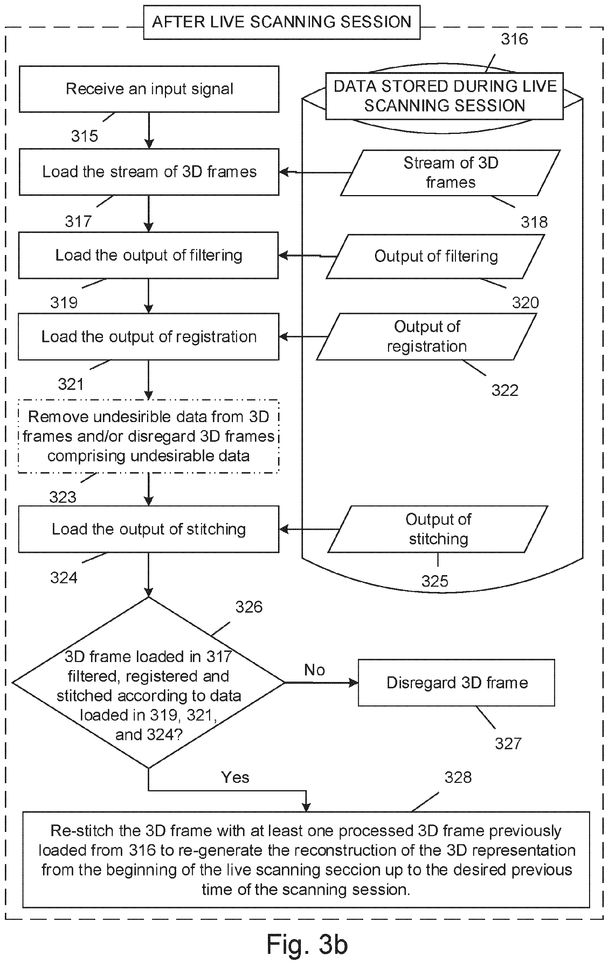

Fig. 3a and 3b illustrate flowcharts according to an embodiment of the computer-implemented method 300 disclosed herein. Referring to Fig. 3a, in step 301 a stream of 3D frames is obtained during a live scanning session of a jaw, and said stream of 3D frames is stored in step 302. Each 3D frame may comprise a plurality of data describing at least the geometry of at least a part of the jaw. In step 303, each 3D frame within the obtained stream of 3D frames is filtered. The filtering of the 3D frames may comprise classifying, e.g. using one or more machine learning method(s), each data point comprised within the 3D frames based on the surface of the object within the oral cavity of the patient to which said data point belongs. For example, if the 3D frames comprise a plurality of data points in 3D space, each point may be classified as belonging to the surface of a tooth, or to the surface of a gingiva, or to the surface of a soft tissue. Filtering the 3D frames may further or alternatively comprise determining whether each 3D frame comprises a number of data points above a predefined threshold, i.e. whether enough information is comprised within the 3D frame, such that said 3D frame can be allocated to the reconstruction of the 3D representation with a predefined accuracy and/or resolution. For example, the predefined threshold for allocating a 3D frame to the reconstruction of the 3D representation with an accuracy of 85% may be a number Nₜₕ=3000 of points in 3D space, i.e. a 3D frame must comprise at least 3000 sets of coordinates (x, y, z) in a Cartesian reference system in order to be allocated to the reconstruction of the 3D representation with an 85% accuracy. In this example, a 3D frame comprising a number N=2000 of points in 3D space will be disregarded in the reconstruction of the 3D representation, as it does not contain enough data points according to the predefined threshold Nₜₕ, whereas a 3D frame comprising a number N=4000 of points in 3D space may be used for the reconstruction of the 3D representation, as it contains a number of data points larger than the predefined threshold Nₜₕ. The output of the filtering is stored in step 304 before any further processing of the 3D frame is performed. The output of the filtering may comprise the filtered 3D frames, and/or information about whether each 3D frame is filtered. The output of the filtering may further comprise the time order in which each 3D frame has been obtained during the live scanning session. For example, if three 3D frames are consecutively obtained during the live scanning session the output may comprise an index '0' for the first 3D frame, an index '1' for the second 3D frame, and an index '2' for the third 3D frame. The 3D frames may further or alternatively comprise time stamps indication of the time at which the 3D frame was obtained. In some embodiments, the filtered 3D frames may be stored in a volatile data depository, such as a Random Access Memory (RAM) of a computer system as shown as reference number 204 in Fig. 2, during the live scanning session, and said filtered 3D frames may be stored on a non-volatile data depository, such as a disk of a computer system as shown as reference number 204 in Fig. 2, at the end of the live scanning session.

In step 305, each 3D frame within the stream of filtered 3D frames is registered. The registration process may comprise determining the position and/or the orientation of each 3D frame relative to at least one previously filtered and processed 3D frame. In step 306, the output of the registration is stored. The output of the registration may comprise information about successful or unsuccessful registration of the 3D frame in step 305, e.g. whether the position and/or orientation of the 3D frame relative to at least one previously processed 3D frame is determined or whether the position and/or orientation of the 3D frame relative to any of the previously processed 3D frames cannot be determined, respectively. The registration of a 3D frame may be unsuccessful when the 3D frame describes a part of the jaw which is not spatially related to any of the parts described by previously registered 3D frames, i.e. when there is no overlap between the 3D data comprised within the 3D frame and the 3D data comprised within any previously registered 3D frame. This situation may occur, for example, when the user moves the intraoral scanner too quickly, such that data relative to two parts of the patient's jaw which are not related and/or adjacent are acquired by the intraoral scanner, e.g. a part of a first molar and a part of a third molar. The output of the registration may further comprise the transformed 3D frames resulting from successful registration in step 305. Each registered 3D frame may comprise data which have been transformed through a spatial transformation, e.g. a rigid transformation consisting of a translation and a rotation, defined according to the position and/or orientation of the 3D frame relative to previously processed 3D frames determined in step 305.

In step 307, undesirable data may be optionally removed from the 3D frames and/or 3D frames comprising undesirable data may be optionally disregarded in the reconstruction of the 3D representation of at least a part of the jaw. Undesirable data may comprise 3D data corresponding to movable objects temporarily and/or permanently present in the jaw of the patient, e.g. 3D data corresponding to: a soft tissue part of the jaw, such as the inside of a cheek, the tongue, lips, gums and/or loose gingival; a dentist's instrument, such as a dental suction device, cotton rolls, and/or cotton pads; the dentist's finger or the dental assistant's finger. In step 308, it is determined whether the 3D frame is registered based on the output of step 305. When it is determined that the 3D frame is registered, in step 309 the 3D frame is stitched together with at least one previously registered 3D frame to generate a reconstruction of the 3D representation of at least a part of the jaw. The reconstruction of the 3D representation is a digital 3D model of at least a part of the jaw, which is continuously updated as more 3D frames are registered and stitched together, such that the reconstruction of the 3D representation describes an increasingly larger part of the patient's jaw as the scanning proceeds. A successful processing of a 3D frame, e.g. when the 3D frame is stitched to at least one previously registered 3D frame, may be referred to herein as a "reconstruction event", such that the reconstruction of the 3D representation of at least a part of the jaw is generated by a plurality of consecutive reconstruction events. When it is determined that the 3D frame is not registered, the processing of the 3D frame is unsuccessful, and step 309 is skipped.

In step 310, the output of the processing performed based on the decision determined in step 308 is stored. The output of the processing may comprise information about successful or unsuccessful stitching of the 3D frame, e.g. whether the 3D frame is stitched with at least one previously registered 3D frame or whether the 3D frame cannot be stitched with any previously registered 3D frame, respectively. The output of the processing may further comprise the reconstruction events which generate the reconstruction of the 3D representation in step 309.

Steps 301-310 of the method 300 take place during the live scanning session of the jaw. After the live scanning session, in step 311 an optimization of the reconstructed 3D representation of at least a part of the jaw may be performed. The optimization step may comprise any causal algorithm, i.e. any processing that is based on all the 3D frames used in the reconstruction of the 3D representation, e.g. based on the position and/or orientation of all the processed 3D frames. For example, the optimization step may comprise a post-processing step performing a global rigid transformation, i.e. a transformation comprising a rotation and a translation, of the processed 3D frames to minimize the error accumulated in the registration step 305 and to improve the accuracy of the reconstructed 3D representation generated through the plurality of reconstruction events obtained in step 309 during the live scanning session. As an example, the rigid transformation optimizing the reconstruction of the 3D representation may be obtained as the transformation which minimizes a cost function, given the data comprised within each 3D frame used in the reconstruction of the 3D representation. In step 312, the output of the optimization step 311 is stored. The output may comprise the post-processed reconstruction of at least a part of the 3D representation. The output may further comprise information about successful or unsuccessful post-processing of the reconstruction of the 3D representation of at least a part of the jaw, e.g. whether the post-processing is completed or whether the post processing is skipped and/or cannot be completed. For example, the post-processing of the reconstruction of the 3D representation may automatically start when the user pauses the scanning. If the user re-starts the scanning of the patient's jaw too quickly, i.e. while the post-processing is still ongoing, the post-processing step will be interrupted and/or skipped, such that the output of the optimization will comprise information of skipped and/or not completed post-processing.

In step 313, after the live scanning session, an input signal may be received. The input signal may comprise a command function to reconstruct a portion of the 3D representation of at least a part of the jaw. By a portion it is meant the reconstruction of the 3D representation consecutively generated in a specific time window [Tᵢ, T_{f}] of the scanning session, wherein Tᵢ is a specific initial time and T_{f} is a specific final time. The initial time Tᵢ and the final time T_{f} may be two times between the time when the scanning session was started and the time when the scanning was stopped or paused. In some embodiments, said initial time Tᵢ may be the beginning of the live scanning session, such that the portion of the reconstruction of the 3D representation is the reconstruction of the 3D representation consecutively generated from the beginning of the live scanning session up to the desired previous time of the scanning. For example, if the scanning session was started at 0 seconds and it was stopped or paused 30 seconds after, the reconstruction of the 3D representation consecutively generated between Tᵢ=0 seconds and T_{f}=10 seconds, i.e. in the time window [0 seconds, 10 seconds], is a portion of the reconstruction of the 3D representation, and the reconstruction of the 3D representation consecutively generated in the time window [0 seconds, 20 seconds] is another portion of the reconstruction of the 3D representation, etc.

The user performing the scanning may want to recover the way the reconstruction of the 3D representation looked like at a previous time of the scanning session for several reasons. For example, the user may detect misalignments in one or more part(s) of the reconstruction of the 3D representation, and/or the gingiva of the patient may collapse while the user is scanning a part of the jaw such as/typically around a prepared tooth, and/or the gingiva may be erroneously elongated in the reconstruction of the 3D representation. In these cases, the user may want and/or need to recover the reconstruction of the 3D representation at a previous time during the scanning session when the reconstruction was in a consistent state, e.g. when it did not have misalignments, and/or the gingiva did not collapse, and/or the gingiva was not elongated. Such a consistent state may be referred to herein as a 'desired state' of the reconstruction of the 3D representation. Based on the input signal received in 313, in step 314 the portion of the 3D representation of at least a part of the jaw is reconstructed by using the stream of filtered 3D frames stored in step 302 and the output of the processing stored in steps 304, and 306, and 310 during the live scanning session. Here, reconstructing the portion of the 3D representation comprises re-generating the desired state of the reconstruction of the 3D representation, wherein the desired state of the reconstruction of the 3D representation is the reconstruction of the 3D representation at the desired previous time of the scanning session.

Fig. 3b illustrates a flowchart of an embodiment of the part of the computer-implemented method disclosed herein that takes place after the live scanning session, said part using the data stored in the part of the method taking place during the live scanning session as illustrated in Fig. 3a.

Referring to Fig. 3b, a plurality of data may have been stored on a data depository 316 during the live scanning session. The data stored on the data depository 316 may comprise the stream of 3D frames 318 obtained and stored during the live scanning session and a plurality of outputs of the processing performed on each 3D frame obtained during the live scanning session, i.e. the output of the filtering 320 for each 3D frame, the output of the registration 322 for each 3D frame, and the output of the stitching 325 for each 3D frame.

In step 315, an input signal is received. The input signal may comprise a command function to re-generate the reconstruction of the 3D representation up to a desired time of the scanning session. The user may issue said input signal because they want and/or need to recover a desired state of the reconstruction of the 3D representation, i.e. the reconstruction of the 3D representation at a previous time of the scanning session. Accordingly, in step 317 the stream of 3D frames from the beginning of the live scanning session up to the desired previous time of the scanning session is loaded from the data depository 315, wherein said 3D frames are time-stamped. In step 319, the output of the filtering 320 is loaded from the data depository 316. The output of the filtering 320 may comprise the 3D frames which have been filtered in step 303 during the live scanning session. The output of the filtering 320 may further comprise the time order in which each 3D frame has been obtained during the live scanning session, such that the stream of filtered 3D frames loaded in step 319 is time-stamped. In step 321, the output of the registration 322 is loaded from the data depository 316. The output of the registration may comprise information about whether each time-stamped 3D frame was registered during the live scanning session, or whether the position and/or orientation of the 3D frame relative to one or more previously processed 3D frame(s) could not be determined during the live scanning session. The output of the registration may further comprise the transformed 3D frames resulting from successful registration in step 305 during the live scanning session.

In step 323, undesirable data may be removed from the loaded stream of 3D frames, and/or the 3D frames comprising undesirable data among the stream of loaded 3D frames may be disregarded in the reconstruction of the desired portion of the 3D representation. Thus, in step 324 the output of the stitching 325 may be loaded from the data depository 315. The output of the stitching 325 may comprise information about whether each time-stamped 3D frame was stitched to at least one previously processed 3D frame in step 309 of the live scanning session. The output of the stitching 325 may further comprise the reconstruction events generated in the stitching step 309 of the live scanning session.

After loading the stream of 3D frames and output of the processing stored during the live scanning session, in step 326 it is determined whether, during the live scanning session, each time-stamped 3D frame loaded is step 317 was filtered based on the output of the filtering 320 loaded in step 319, and registered based on the output of the registration 322 loaded in step 321, and stitched to at least one previously processed 3D frame based on the output of the stitching 325 loaded in step 324. When it is determined that a time-stamped 3D frame was not filtered, and/or said 3D frame was not registered, and/or said 3D frame was not stitched during the live scanning session, in step 327 the 3D frame is disregarded, and it is not added to the reconstruction of the 3D representation. When it is determined that a time-stamped 3D frame loaded from the data depository 316 was filtered, and registered, and stitched during the live scanning session, in step 328 the 3D frame is re-stitched with at least one processed 3D frame which was previously loaded from the depository 316. Steps 319-328 of the method are performed for each 3D frame obtained during the live scanning session, until the 3D frame obtained, processed and stored at the desired previous time of the scanning session is re-stitched with at least one processed 3D frame previously loaded from the data depository 316, such that the reconstruction of the 3D representation up to the desired previous time of the scanning session is re-generated. The information about the time when each 3D frame was obtained and processed during the live scanning session may be comprised within the outputs loaded in steps 319, 321 and 324, such that the reconstruction of the 3D representation up to the desired time is re-generated by consecutively re-stitching together the registered 3D frames in the same order as said 3D frames where stitched together during the live scanning session. This ensures that the re-generated reconstruction of the 3D representation at the desired previous time of the scanning session is the exact state of the reconstruction of the 3D representation that was displayed to the user at said time during the live scanning.

The data loaded in steps 317, 319, 321 and 324 may be used in steps 319, 321, 323, 324 and 328 without re-processing the data, and/or re-processing a part of the data, and/or re-performing only a part of the processing on the data. For example, referring to Fig. 3b, the output of the registration stored during the live scanning session is used in step 323 and in step 328, such that the registration step is not rerun, whereas the steps of removing undesirable data from the registered 3D frame and of stitching the registered 3D frames together with at least one previously loaded 3D frame are re-performed. Thus, the re-generation of the reconstruction of the 3D representation is much faster than it would be if all the steps of the processing were to be run again. In this way, the reconstruction process is 'fast-forwarded' from the beginning of the live scanning session to the desired time of the scanning session.

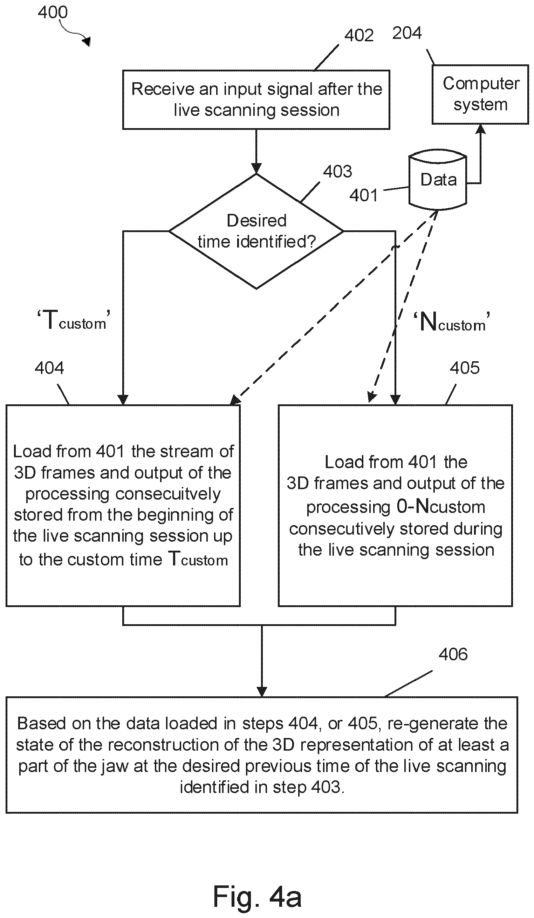

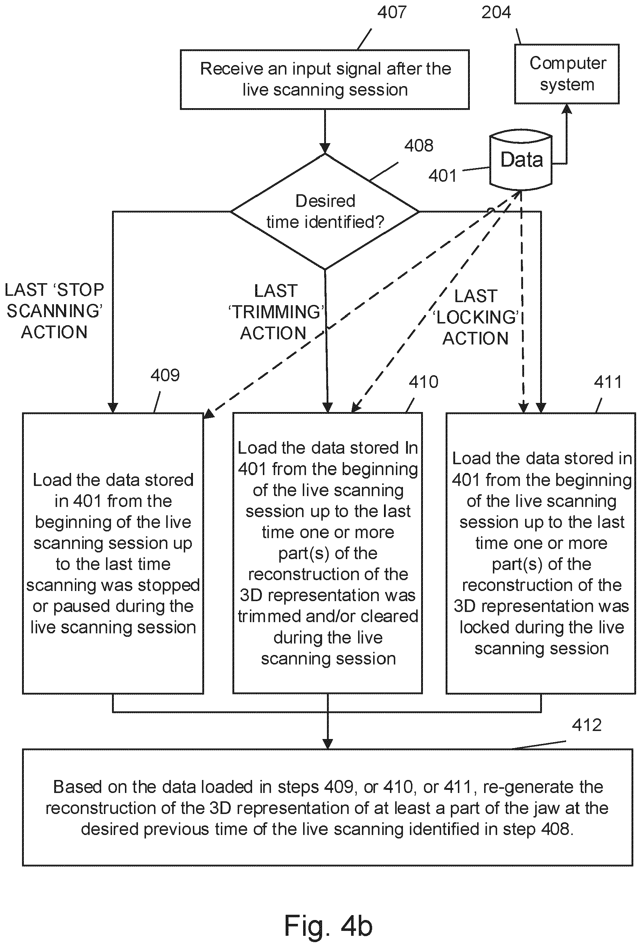

Fig. 4a and 4b illustrate reference diagrams for describing a method 400 by which a computer system 204 operates according to a computer-implemented method disclosed herein. The computer system 204 may comprise at least one data depository 401, wherein the data depository may be configured to provide non-volatile storage for the computer system 204. The data depository 401 may be further configured to provide persistent storage for the computer system 204 for retaining data even when the system is powered off. The data depository 401 may have stored thereon a number of time-stamped data acquired during a live scanning session of a jaw. The data stored on the data depository 401 may comprise a stream of time-stamped 3D frames obtained during the live scanning session and a plurality of outputs of the processing performed on the stream of 3D frames during the live scanning session. The output of the processing stored on the data depository 401 may comprise the stream of filtered 3D frames and/or information about whether each 3D frame was filtered. The output of the processing stored on the data depository 401 may further comprise information about whether the position and/or orientation of each 3D frame relative to at least one previously processed was determined, i.e. whether the 3D frame was or was not registered during the live scanning session. The output of the processing may further or alternatively comprise the transformed 3D frames resulting from successful registration. The output of the processing stored on the data depository 401 may further comprise information about whether the 3D frame was stitched with previously registered 3D frames, i.e. whether the 3D frame was processed or was not processed during the live scanning session. The output of the processing may further or alternatively comprise the reconstruction events which generate the reconstruction of the 3D representation. The data stored on the data depository 401 may further comprise information about whether the reconstruction of the 3D representation of at least a part of the jaw was optimized, i.e. whether a post-processing step was completed or skipped after the live scanning. For example, said post-processing step may comprise a global rigid transformation, i.e. a transformation consisting of a translation and rotation, which was performed on the processed 3D frames used to generate the reconstruction of the 3D representation to minimize the error accumulated in the registration of the 3D frames during the live scanning session. The data stored on the data depository 401 may further or alternatively comprise the post-processed reconstruction, i.e. the reconstruction of the 3D representation resulting from the post-processing step.

Referring to Fig. 4a, after the live scanning session is terminated or paused, the user may issue an input signal in step 402. The computer system 204 may be configured to receive the input signal from an intraoral scanner, such as shown as reference number 202 in Fig. 2. The computer system 204 may be further or alternatively configured to detect the input signal through one or more external devices connected to 204, such as keyboards and/or mice. The input signal received in step 402 may comprise a command function to re-generate the reconstruction of the 3D representation at a desired previous time of the scanning session. The user performing the scanning may want to recover the way the reconstruction of the 3D representation looked like at a previous time of the scanning session for several reasons. For example, the user may detect misalignments in one or more part(s) of the reconstruction of the 3D representation, and/or the gingiva of the patient may collapse while the user is scanning a part of the jaw such as/typically around a prepared tooth, and/or the gingiva may be erroneously elongated in the reconstruction of the 3D representation. Accordingly, the user may want to recover the reconstruction of the 3D representation at a previous time during the scanning session when the reconstruction was in a desired state, e.g. when the reconstruction did not contain any errors.

In step 403, it is determined whether the desired previous time of the scanning session is identified. The desired previous time may comprise the time 'T_{custom}' that may be a predefined time, and/or a time selected by the user within the time window [Tᵢ, T_{f}] of the scanning session, wherein Tᵢ is the time when the scanning session was started and T_{f} is the time when the scanning session was stopped or paused. In particular, Tᵢ and T_{f} may be the beginning and the end of the scanning session, and/or the beginning and the end of a segment of the scanning session, and/or the beginning of the live scanning session and the end of a segment of the scanning session, resepctively. For example, if the scanning session was started at the initial time Tᵢ=0 seconds and the scanning was stopped or paused at the time T_{f}=30 seconds, the user may want or need to recover the reconstruction of the 3D representation at the time T_{custom}=5 seconds, or T_{custom}=10 seconds, or T_{custom}=15 seconds, etc.

The desired previous time may further comprise the time of the scanning session when the reconstruction of the 3D representation was based on the processed 3D frames 0-N_{custom}, wherein N_{custom} may be a predefined number, and/or a number selected by the user. For example, the time-stamped 3D frames 0-500 may have been consecutively stitched together to generate the reconstruction of the 3D representation during the live scanning session up to the time when the scanning is terminated or paused. In this example, the user may want to re-generate the state of the reconstruction of the 3D representation based on the 3D frames 0-300 consecutively obtained during the live scanning session, such that N_{custom}=300, or the state of the reconstruction of the 3D representation based on the 3D frames 0-200 consecutively obtained during the live scanning session, such that N_{custom}=200, etc.

When the desired previous time is determined to be 'T_{custom}', in step 404 the stream of 3D frames and output of the processing consecutively stored on the data depository 401 from the beginning of the live scanning session up to the time T_{custom} are loaded from the data depository 401. For example, the user may stop and/or pause the live scanning after a time Tₜₒₜ=50 seconds from the beginning of the scanning session because they detect an error in the reconstruction of the 3D representation, e.g. misalignments of one or more part(s) of the reconstruction, and/or collapsed gingiva, and/or elongated gingiva in one or more part(s) of the reconstruction. Accordingly, the user may re-generate the reconstruction of the 3D representation from the beginning of the live scanning session up to T_{custom}=20 seconds after the beginning of the scanning session. In this example, referring to Fig. 4b, in step 404 the stream of 3D frames and output of the processing consecutively obtained from the beginning of the live scanning session up to T_{custom}=20 seconds is loaded from the data depository 401.

When the desired previous time is determined to be 'N_{custom}', in step 405 the stream of time-stamped 3D frames and output of the processing from the beginning of the live scanning session up to the N_{custom}-th 3D frame obtained and processed during the live scanning are loaded from data depository 401, i.e. the time-stamped 3D frames and output of the processing 0-N_{custom} are loaded from the data depository 401. For example, the user may stop and/or pause the live scanning at a time when the reconstruction of the 3D representation is based on a total number Nₜₒₜ=500 of processed 3D frames because they detect an error in the reconstruction of the 3D representation, e.g. misalignments of one or more teeth, and/or collapsed gingiva, and/or elongated gingiva. Accordingly, the user may want to re-generate the reconstruction of the 3D representation based on the 3D frames 0-400 consecutively obtained and processed during the scanning session, i.e. N_{custom}=400. In this example, referring to Fig. 4a, the 3D frames and output of the processing 0-400 consecutively obtained and stored during the live scanning session are loaded from the data depository 401. In step 406, the reconstruction of the 3D representation at the desired previous time of the scanning session identified in step 403 is re-generated based on the data loaded in steps 404 or 405. Step 406 may comprise re-generating the reconstruction of the 3D representation using only the data loaded from the data depository 401 without re-processing any of the loaded data, e.g. using the reconstruction events stored on the data depository 401. Step 406 may further comprise loading the data stored on the repository and re-performing one or more step(s) of the processing based on the information comprised within the loaded data, e.g. the output of the registration for each 3D frame may be used to determine which 3D frame should be re-stitched together to re-generate the reconstruction of the 3D representation, such that the registration step is not rerun, while the stitching step is re-performed based on the output of the registration stored during the live scanning session. This ensures that the stored 3D frames and at least one output of the processing performed during the live scanning session and stored on the data depository 401 are used in step 406, thereby making the re-generation process substantially faster than it would be by re-running every processing algorithm for each 3D frame.

Fig. 4b illustrates a reference diagram describing a further or alternative method to the one illustrated in Fig. 4a by which the computer system 204 operates according to the computer-implemented method disclosed herein.

Referring to Fig. 4b, in step 407 an input signal may be received after the live scanning session. The input signal may comprise a command function to reconstruct a portion of the 3D representation of at least a part of a jaw. Reconstructing a portion of the 3D representation may comprise re-generating a desired state of the reconstruction of the 3D representation, wherein the desired state of the reconstruction of the 3D representation is the reconstruction of the 3D representation at a desired previous time of the scanning session. The user performing the scanning may want to recover the way the reconstruction of the 3D representation looked like at a previous time of the scanning session for several reasons. For example, the user may detect misalignments in one or more part(s) of the reconstruction of the 3D representation, and/or the gingiva of the patient may collapse while the user is scanning a part of the jaw such as/typically around a prepared tooth. In both examples, the user may detect that the reconstruction of the 3D representation of at least a part of the jaw is different from what they saw in the oral cavity of the patient during the scanning session. Accordingly, the user may want to recover the reconstruction of the 3D representation at a previous time during the scanning session when said reconstruction was in a desired state, e.g. when the reconstruction did not have any errors. In step 408, it is determined whether the desired previous time of the scanning session is identified. For example, the desired previous time of the scanning session may comprise: the last time during the live scanning session when a 'stop scanning' action was performed, i.e. when the scanning was stopped and/or paused; the last time during the scanning session when a 'trimming' action was performed, i.e. when one or more part(s) of the reconstruction of the 3D representation was trimmed and/or cleared; the last time during the live scanning session when a 'locking' action was performed, i.e. when one or more part(s) of the reconstruction of the 3D representation was locked, such that any transformation of the locked part was not allowed.

When the desired previous time is identified to be the last 'stop scanning' action, in step 409 the data stored in the data depository 401 are loaded from the time the live scanning session was started up to the last time the scanning was stopped or paused during the live scanning session. The data stored on the data depository 401 may comprise the stream of 3D frames obtained during the live scanning session and the output of the processing obtained during the live scanning session. When the desired previous time is identified to be the last 'trimming' action, in step 410 the data stored in the data depository 401 are loaded from the time the live scanning session was started up to the last time one or more part(s) of the reconstruction of the 3D representation was trimmed and/or cleaned during the live scanning session. When the desired previous time is identified to be the last 'locking' action, in step 411 the data stored in the data depository 401 are loaded from the time the live scanning session was started up to the last time one or more part(s) of the reconstruction of the 3D representation was locked during the live scanning session. In step 412, the reconstruction of the 3D representation at the desired previous time of the scanning session identified in step 408 is re-generated based on the data loaded in steps 409, or 410, or 411. Step 412 may comprise re-generating the reconstruction of the 3D representation using only the data loaded from the data depository 401 without re-processing any of the loaded data, e.g. using the reconstruction events stored on the data depository 401. Step 412 may further comprise loading the data stored on the repository and re-performing one or more step(s) of the processing based on the information comprised within the loaded data. For example, the output of the registration for each 3D frame may be used to determine which 3D frame should be re-stitched to re-generate the reconstruction of the 3D representation, such that the registration step is not rerun, while the stitching step is re-performed based on the output of the registration stored during the live scanning session. This ensures that the stored 3D frames and at least one output of the processing performed during the live scanning session and stored on 401 are used in step 412, thereby making the re-generation process substantially faster than it would be by re-running every processing of each 3D frames.

The diagram 400 may be repeated a plurality of times based on a plurality of input signals received after the live scanning session, such that a plurality of desired states of the reconstruction of the 3D representation of the jaw may be re-generated and/or recovered after the live scanning session.

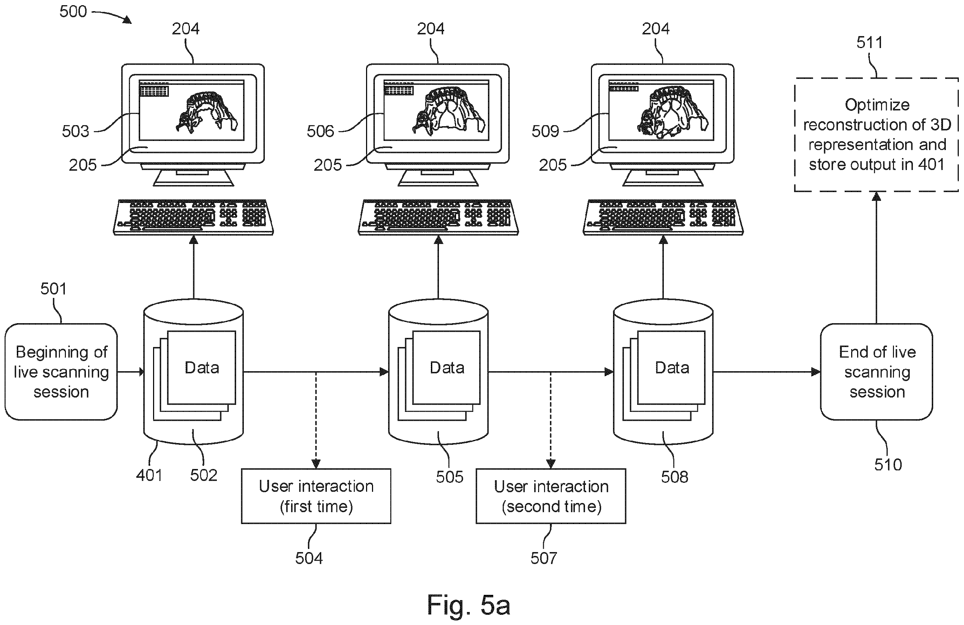

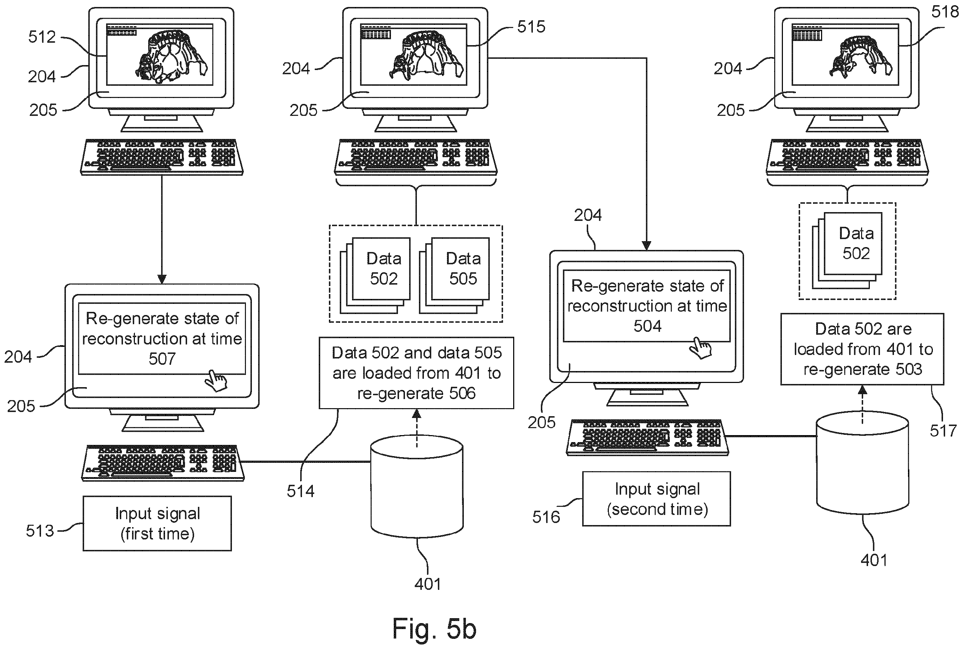

Fig. 5a and 5b are reference diagrams for describing a method 500 by which a computer system 204 operates according to the computer-implemented method disclosed herein. A live scanning session of a jaw is started in 501. A first set of time-stamped data 502 is obtained and stored in a data depository 401 during the live scanning session. The data 502 may comprise a stream of time-stamped 3D frames obtained during the live scanning session and output of processing performed during the live scanning session. The computer system 204 may be configured to generate a reconstruction of a 3D representation of at least a part of the jaw based on the set of data received during the live scanning session. The reconstruction of the 3D representation is a digital 3D model of at least a part of the jaw that may be generated by combining a plurality of processed 3D frames, such that the reconstruction of the 3D representation describes an increasingly larger part of the jaw as more processed 3D frames are stitched together. Referring to Fig. 5a, the computer system may generate the reconstruction of the 3D representation of at least a part of the jaw based on the data 502. An image 503 of the reconstruction of the 3D representation based on 502 may be displayed on a display 205 of the computer system 204. During the live session, the user may perform a plurality of interactions with the reconstruction of the 3D representation. Said interactions may comprise acquiring one or more new 3D frame(s) with the intraoral scanner. The user interactions may further comprise stopping or pausing the scanning one or more time(s), e.g. to check the image of the generated 3D reconstruction on the display 205, and/or to perform an action on the displayed reconstruction of the 3D representation. The action performed on the reconstruction of the 3D representation may comprise a trimming action, i.e. one or more part(s) of the reconstruction of the 3D representation may be trimmed and/or cleared. The action may further comprise a locking action, i.e. one or more part(s) of the reconstruction of the 3D representation are locked, such that any transformation of the locked part(s) is not allowed. Accordingly, the scanning session of at least a part of the jaw may be carried out in a sequence of segments. For example, referring to Fig. 4a, time 504 may be a first specific time among the plurality of times when the user performs any kind of interaction with the reconstruction of the 3D representation, e.g. at time 504 the user acquires a new 3D frame with the intraoral scanner, or the user pauses the scanning, or the user performs a trimming action, or the user performs a locking action, and so forth. Accordingly, a first segment of the scanning session, i.e. the segment between the beginning of the scanning session and time 504, may be terminated.

A second segment of the live scanning session may be started after time 504, such that a new set of time-stamped data 505 may be obtained and stored in the data depository 401 during the second segment of the live scanning session. The data 505 may comprise a stream of time-stamped 3D frames obtained during the second segment of the live scanning session and output of processing performed during the second segment of the live scanning session. The processed 3D frames obtained during the second segment of the live scanning session and comprised within 505 are stitched to the already existing reconstruction of the 3D representation based on 502, i.e. the reconstruction displayed in 503, such that the reconstruction of the 3D representation describes an increasingly larger part of the jaw as the scanning proceeds. An image 506 of the reconstruction of the 3D representation based on 502 and 505 may be displayed on the display 205. Referring to Fig. 5a, time 507 may be a second specific time among the plurality of times when the user performs any kind of interaction with the reconstruction of the 3D representation, e.g. the user acquires a new 3D frame with the intraoral scanner, or the user pauses the scanning, or the user performs a trimming action, or the user performs a locking action, and so forth. Accordingly, a second segment of the scanning session, i.e. the segment between time 504 and time 507, may be terminated.

A third segment of the live scanning session may be started after time 507, such that a new set of data 508 may be obtained and stored in the data depository 401 during the third segment of the live scanning session. The data 508 may comprise a stream of 3D frames obtained during the third segment of the live scanning session and output of processing performed during the third segment of the live scanning session. The processed 3D frames obtained during the third segment of the live scanning session and comprised within 508 are stitched with the already existing reconstruction of the 3D representation based on 502 and 505, i.e. the reconstruction displayed in 506, such that the reconstruction of the 3D representation describes an increasingly larger part of the jaw. An image 509 of the reconstruction of the 3D representation based on 502, 505 and 508 may be displayed on the display of the computer system 204. The live scanning session may end in step 510. Accordingly, the third segment of the live scanning session terminates, i.e. the segment between time 507 and the end of the scanning session 510.

After the live scanning session ends, in step 511 the reconstruction of the 3D representation displayed in 509 may be optimized and the output of the optimization processing may be stored in the depository 401. For example, the optimization processing may comprise a post-processing step performing a global rigid transformation, i.e. a transformation consisting of a translation and a rotation, of the processed 3D frames used to generate the reconstruction of the 3D representation to minimize the error accumulated while reconstructing the 3D representation during the live scanning session.

Fig. 5b illustrates the workflow for re-generating, after the live scanning session, a desired state among the states of the reconstruction of the 3D representation of at least a part of the jaw generated during the live scanning session illustrated in Fig. 5a. An image 512 corresponding to the post-processed reconstruction of the 3D representation of at least a part of the jaw obtained and stored in step 511 may be displayed on the display 205 of the computer system 204. While the image 512 is displayed, a user may want to recover the reconstruction of the 3D representation at a previous time of the scanning session. The reconstruction of the 3D representation at a previous time T during the scanning session may be referred to herein as `state of the reconstruction' at time T. The user may want to re-generate a previous state of the reconstruction of the 3D representation for a number of reasons and purposes. For example, the user may detect through the display that the image 512 corresponds to an inconsistent state of the reconstruction of the 3D representation, e.g. due to the misalignments of the processed 3D frames used to generate the reconstruction during the live scanning, and/or due to a collapsed gingiva around a prepared tooth, and/or due to elongated gingiva, and so forth.

As an example, referring to Fig. 5b, the user may want to recover the reconstruction of the 3D representation at time 507 of the scanning session as shown in Fig. Sa, i.e. at a desired time among the plurality of times when the user performed any kind of interaction with the reconstruction of the 3D representation during the live scanning session. For example, the time 507 may correspond to the time when the user acquired a specific 3D frame during the scanning session, or the time when the user paused the scanning for the second time, or the time when the user performed a trimming action on the 3D representation for the second time, or the time when the user performed a locking action on the 3D representation for the second time. For example, the user may pause the scanning 30 seconds after starting the scanning session because they want to recover the state of the reconstruction of the 3D representation at 25 seconds, i.e. the time 507 corresponds to 25 seconds in this example. Accordingly, the user may issue a first input signal 513 corresponding to a command function to re-generate the state of the reconstruction of the 3D representation at time 507 of the scanning session. The input signal 513 may be issued through one or more sensor(s) included in the intraoral scanner, such as shown as reference number 202 in Fig. 2. The input signal may be further or alternatively issued through a number of external devices connected to the computer system 204, such as a keyboard and/or a mouse. To make the selection easier for the user, the input signal 513 may further comprise identifying and selecting the desired previous time of the scanning session through the display 205 of the computer system 204.

The input signal 512 is provided to the computer system, and the computer system may load a number of data from the data depository 401 to re-generate the reconstruction of the 3D representation at time 507 of the scanning session. For example, the reconstruction of the 3D representation at time 507 may be based on the time-stamped data 502 and 505 obtained and stored during the live scanning session. Accordingly, the computer system may load in 514 the data 502 and 505 from the data depository 401. The data 502 and 505 may comprise the stream of stored 3D frames and output of the processing sequentially stored during the live scanning session of the jaw. The loaded data 502 and 505 may be used by the computer system to re-generate the reconstruction of the 3D representation at time 507 of the scanning session, i.e. the state displayed in the image 506 referring to Fig. 5a, thereby making the re-generation process substantially faster than it would be by re-running each processing of each 3D frame. An image 515 corresponding to the re-generated desired state of the reconstruction of the 3D representation may be displayed on the display 205 of the computer system 204. While the image 515 is displayed, the user may issue a second input signal 516 corresponding to a command function to re-generate the reconstruction of the 3D representation at a second desired previous time of the live scanning session. For example, the second input signal 516 may be issued because the user detects on the display 205 that the image 515 does not correspond to the desired state of the reconstruction, e.g. because there is still one or more misalignment(s) and/or collapsed gingiva in the displayed reconstruction of the 3D representation. When the input signal 515 is received by the computer system, the data on which the reconstruction of the 3D representation at the desired time is based are loaded from the data depository 401. For example, the input signal 516 may correspond to a command function to re-generate the reconstruction of the 3D representation at time 504 of the live scanning, wherein the reconstruction at time 504 is based on the time-stamped data 502 obtained and stored during the live scanning session. Accordingly, in 517 the computer system 204 may load the data 502, and said data 502 may be used by the computer system to re-generate the reconstruction of the 3D representation at time 504 of the live scanning, i.e. the state displayed in the image 503 referring to Fig. 5a. An image 518 corresponding to the re-generated desired state of the reconstruction of the 3D representation may be displayed on the display 205 of the computer system 204.

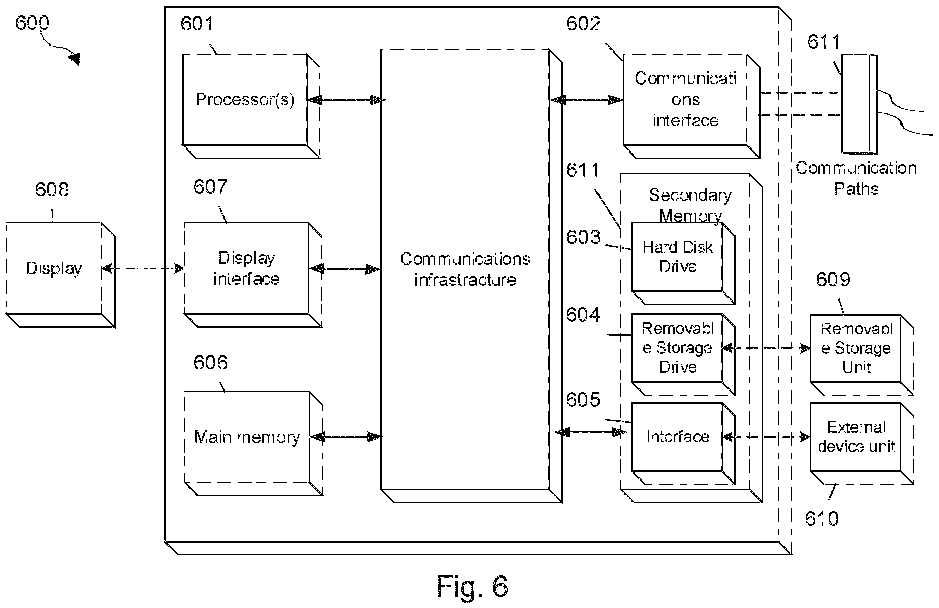

Fig. 6 schematically illustrates a computer system 600 in which the computer-implemented method disclosed herein, or parts thereof, may be implemented as computer-readable code. The computer system may comprise a plurality of components enabling data processing, storage, communication and user interaction. The computer system described herein may comprise one or more processor(s) 601, a communication interface 602, a main memory 606, a secondary memory 611, a display interface 607, and a display 608. The one or more processor(s) 601 may be configured to execute one or more steps of the computer-implemented method disclosed herein. The communication interface 602 may be configured to support a number of communication protocols, such as Ethernet, Wi-fi, Bluetooth etc, for enabling the computer system 600 to access a number of communication paths. For example, the communication interface 602 may be configured to enable the computer system 600 to receive and/or exchange data and to communicate with external devices and networks. The communication interface 402 may be further configured to receive one or more input signal(s) from other devices, e.g. the intraoral scanner 201, which causes the computer to execute one or more steps of the computer-implemented method disclosed herein.

The secondary memory 611 may comprise a hard disk drive 603, a removable storage drive 604 and an interface 605. The hard disk drive 603 may be configured to provide non-volatile storage for the computer system 600 for storing computer-readable programs, operating system files, user data, etc. The hard disk drive 603 may be further configured to provide persistent storage for the computer system for retaining data even when the system is powered off. The removable storage drive 604 may be configured to enable the computer to access external storage units for reading from and/or writing to the removable storage units. For example, the removable storage drive 604 may be a CD/DVD drive or USB port. The interface 605 may be configured to connect various external devices 610, such as keyboards, mice, printers, scanners, or audio devices, to the computer system.

Although some embodiments have been described and shown in detail, the disclosure is not restricted to such details, but may also be embodied in other ways within the scope of the subject matter defined in the following claims. In particular, it is to be understood that other embodiments may be utilized, and structural and functional modifications may be made without departing from the scope of the present invention.

A claim may refer to any of the preceding claims, and "any" is understood to mean "any one or more" of the preceding claims. As used, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, steps, operations, elements, and/or components, but do not preclude the presence or addition of one or more other features, steps, operations, elements, components, and/or groups thereof. As used herein, the term "and/or" includes any and all combinations of one or more of the associated listed items. The steps of any disclosed method is not limited to the exact order stated herein, unless expressly stated otherwise.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art, and the generic principles defined herein may be applied to other aspects.

The claims are not intended to be limited to the aspects shown herein, but is to be accorded the full scope consistent with the language of the claims, wherein reference to an element in the singular is not intended to mean "one and only one" unless specifically so stated, but rather "one or more." Unless specifically stated otherwise, the term "some" refers to one or more.

### Items

1. A computer-implemented method of reconstructing a portion of a three-dimensional (3D) representation of at least a part of a jaw, the method comprising the steps of:
   - Obtaining and storing a stream of 3D frames during a live scanning session of the jaw, wherein each 3D frame comprises data describing at least the geometry of at least a part of the jaw;
   - Processing the stream of 3D frames;
   - Storing the output of the processing;
   - During the live scanning, reconstructing the 3D representation of at last a part of the jaw based on the processed 3D frames; and
   - Based on an input signal received after the live scanning, reconstructing the portion of the 3D representation of at least a part of the jaw based on the stored stream of 3D frames and output of the processing stored during the live scanning.
2. The method of item 1, wherein processing the stream of 3D frames further comprises filtering the stream of 3D frames before any further processing of the 3D frames is performed.
3. The method of item 2, wherein filtering the stream of 3D frames further comprises classifying each data point comprised within the 3D frames based on a surface of an object in a patient's oral cavity to which said data point belongs, such as the surface of a tooth, the surface of a gingiva, and/or the surface of a soft tissue.
4. The method of any one or more of items 2-3, wherein filtering the stream of 3D frames may further comprise disregarding 3D frames comprising a number of data points which is below a predefined threshold in the reconstruction of the 3D representation of at least a part of the jaw, and wherein said threshold comprises a minimum number of data points required for processing the 3D frames with a predefined resolution and/or accuracy.
5. The method of any of the preceding items, wherein processing the stream of 3D frames further comprises determining the position and/or orientation of each 3D frame relative to at least one previously processed 3D frame.
6. The method of any of the preceding items, wherein processing the stream of 3D frames further comprises removing undesirable data from the 3D frames.
7. The method of any of the preceding items, wherein processing the stream of 3D frames further comprises disregarding 3D frames comprising undesirable data in the reconstruction of the 3D representation.
8. The method of any one or more of items 6-7, wherein the undesirable data comprises data corresponding to movable objects temporarily and/or permanently present in the oral cavity of the patient.
9. The method of any of the preceding items, wherein processing the stream of 3D frames further comprises stitching registered 3D frames with previously registered 3D frames to generate a reconstruction of the 3D representation of at least a part of the jaw.
10. The method of any of the preceding items, wherein reconstructing the 3D representation of at least a part of the jaw further comprises performing an optimization step after the live scanning session.
11. The method of item 10, wherein the optimization step comprises translating and rotating the processed 3D frames to minimize the error accumulated in the registration of the 3D frames during the live scanning session.
12. The method of any of the preceding items, wherein reconstructing the portion of the 3D representation of at least a part of the jaw further comprises, after the live scanning session, re-generating a desired state of the reconstruction of the 3D representation of at least a part of the jaw.
13. The method of item 12, wherein the desired state of the reconstruction of the 3D representation of at least a part of the jaw is the reconstruction of the 3D representation of at least a part of the jaw at a desired previous time of the scanning session.
14. The method of item 13, wherein the desired previous time comprises a time from among one or more time(s) when the scanning was stopped or paused during the live scanning session.
15. The method of item 13, wherein the desired previous time comprises a time from among one or more time(s) when a trimming action was performed on the reconstruction of the 3D representation during the live scanning session.
16. The method of item 13, wherein the desired previous time comprises a time from among one or more time(s) when a locking action was performed on the reconstruction of the 3D representation during the live scanning session.
17. The method of any one or more of items 12-16, wherein re-generating the desired state of the reconstruction of the 3D representation of at least a part of the jaw further comprises loading the stream of stored 3D frames, and loading the output of the processing stored during the live scanning session from the beginning of the live scanning session up to the desired previous time of the scanning session, and rerun one or more step(s) of the processing based on the output of the processing stored during the scanning session.
18. The method of any one or more of items 12-17, wherein re-generating the desired state of the reconstruction of the 3D representation of at least a part of the jaw further comprises loading the stream of stored 3D frames and loading the output of the processing stored during the live scanning session from the beginning of the live scanning session up to the desired previous time of the scanning session, without re-processing the stream of 3D frames.
19. A computer program product comprising instructions which, when the program is executed by a computer, cause the computer to perform the method according to any of the preceding items.
20. A non-volatile computer-readable medium comprising instructions which, when executed by a computer, cause the computer to perform the method according to any of the preceding items.
21. A system for reconstructing a portion of a 3D representation of at least a part of a jaw, the system comprising:
   - an intraoral scanner;
   - a communication interface;
   - one or more processor(s);
   - a display;
   - one or more memories containing program content executable by said one or more processor(s), said program content comprising:
      i. executable instructions to obtain and store a stream of 3D frames during a live scanning session of a jaw;
      ii. executable instruction to process the stream of 3D frames;
      iii. executable instructions to store the output of the processing;
      iv. executable instructions to reconstruct, during the live scanning session, the 3D representation of at least a part of the jaw based on the processed 3D frames;
      v. executable instructions to reconstruct, based on an input signal received after the live scanning, the portion of the 3D representation of at least a part of the jaw based on the stored stream of 3D frames and output of the processing stored during the live scanning.

## Claims

1. A computer-implemented method of reconstructing a portion of a three-dimensional (3D) representation of at least a part of a jaw, the method comprising the steps of:
- Obtaining and storing a stream of 3D frames during a live scanning session of the jaw, wherein each 3D frame comprises data describing at least the geometry of at least a part of the jaw;
- Processing the stream of 3D frames;
- Storing the output of the processing;
- During the live scanning, reconstructing the 3D representation of at last a part of the jaw based on the processed 3D frames; and
- Based on an input signal received after the live scanning, reconstructing the portion of the 3D representation of at least a part of the jaw based on the stored stream of 3D frames and output of the processing stored during the live scanning.

2. The method of claim 1, wherein processing the stream of 3D frames further comprises filtering the stream of 3D frames before any further processing of the 3D frames is performed.

3. The method of claim 2, wherein filtering the stream of 3D frames further comprises classifying each data point comprised within the 3D frames based on a surface of an object in a patient's oral cavity to which said data point belongs, such as the surface of a tooth, the surface of a gingiva, and/or the surface of a soft tissue.

4. The method of any of the preceding claims, wherein processing the stream of 3D frames further comprises determining the position and/or orientation of each 3D frame relative to at least one previously processed 3D frame.

5. The method of any of the preceding claims, wherein processing the stream of 3D frames further comprises disregarding 3D frames comprising undesirable data in the reconstruction of the 3D representation.

6. The method of claim 5, wherein the undesirable data comprises data corresponding to movable objects temporarily and/or permanently present in the oral cavity of the patient.

7. The method of any of the preceding claims, wherein processing the stream of 3D frames further comprises stitching registered 3D frames with previously registered 3D frames to generate a reconstruction of the 3D representation of at least a part of the jaw.

8. The method of any of the preceding claims, wherein reconstructing the portion of the 3D representation of at least a part of the jaw further comprises, after the live scanning session, re-generating a desired state of the reconstruction of the 3D representation of at least a part of the jaw.

9. The method of claim 8, wherein the desired state of the reconstruction of the 3D representation of at least a part of the jaw is the reconstruction of the 3D representation of at least a part of the jaw at a desired previous time of the scanning session.

10. The method of claim 9, wherein the desired previous time comprises a time from among one or more time(s) when the scanning was stopped or paused during the live scanning session.

11. The method of claim 9, wherein the desired previous time comprises a time from among one or more time(s) when a trimming action was performed on the reconstruction of the 3D representation during the live scanning session.

12. The method of any one or more of claims 8-11, wherein re-generating the desired state of the reconstruction of the 3D representation of at least a part of the jaw comprises loading the stream of stored 3D frames, and loading the output of the processing stored during the live scanning session from the beginning of the live scanning session up to the desired previous time of the scanning session, and rerun one or more step(s) of the processing based on the output of the processing stored during the scanning session.

13. The method of any one or more of claims 8-12, wherein re-generating the desired state of the reconstruction of the 3D representation of at least a part of the jaw further comprises loading the stream of stored 3D frames, and loading the output of the processing stored during the live scanning session from the beginning of the live scanning session up to the desired previous time of the scanning session, without re-processing the stream of 3D frames.

14. A computer program product comprising instructions which, when the program is executed by a computer, cause the computer to perform the method according to any of the preceding claims.

15. A system for reconstructing a portion of a 3D representation of at least a part of a jaw, the system comprising:
- an intraoral scanner;
- a communication interface;
- one or more processor(s);
- a display;
- one or more memories containing program content executable by said one or more processor(s), said program content comprising:
i. executable instructions to obtain and store a stream of 3D frames during a live scanning session of a jaw;
ii. executable instruction to process the stream of 3D frames;
iii. executable instructions to store the output of the processing;
iv. executable instructions to reconstruct, during the live scanning, the 3D representation of at least a part of the jaw based on the processed 3D frames;
v. executable instructions to reconstruct, based on an input signal received after the live scanning, the portion of the 3D representation of at least a part of the jaw based on the stored stream of 3D frames and output of the processing stored during the live scanning.
